# EUROPÄISCHE PATENTSCHRIFT

(11) **EP 0 596 397 B1**
(45) Veröffentlichungstag und Bekanntmachung des Hinweises auf die Patenterteilung: **08.07.1998**
(21) Anmeldenummer: 93117433.8
(22) Anmeldetag: 27.10.1993
(51) Int. Cl.: H05B 41/29

(54) **Schaltungsanordnung zum hochfrequenten Betrieb eines Verbrauchers**
High frequency power supply
Circuit d'alimentation à haute fréquence

(30) Priorität: 04.11.1992 DE 4237262
(43) Veröffentlichungstag der Anmeldung: 11.05.1994
(73) Patentinhaber: Patent-Treuhand-Gesellschaft für elektrische Glühlampen mbH, 81543 München (DE)
(72) Erfinder: Reiser, Ludwig, D-86368 Gersthofen (DE)

(56) Entgegenhaltungen:
- EP-A- 0 395 776
- EP-A- 0 488 478
- WO-A-91/02400
- WO-A-92/22953
- US-A- 5 068 573

## Beschreibung

Die Erfindung betrifft eine Schaltungsanordnung zum Betrieb eines Verbrauchers, mit einem Gleichrichter, einer Vorschaltimpedanz, einem Siebkondensator und einem HF-Inverter.

Ein solche Schaltungsanordnung ist aus EP-A-0 488 478 bekannt.

Aufgrund des parallel zum Gleichstromausgang geschalteten Siebkondensators benötigen diese Schaltungsanordnungen eine Oberwellenfilterung. Diese besteht entweder aus einer vollelektronischen Schaltung, die kompliziert und kostspielig ist, dafür aber eine fast perfekte Sinusstromaufnahme bietet, oder aus einer Vorschaltimpedanz in Reihe zur Gesamtschaltung, die entweder magnetisch und damit groß und kostspielig oder ohmisch und damit stark verlustbehaftet ist, oder aus Kaskaden aus zwei Siebkondensatoren und drei Dioden.

Eine weitere Schaltung zur Oberwellenunterdrückung ist unter anderem auch aus der europäischen Patentschrift O 253 224 B1 bekannt. Diese weist zusätzlich zu zwei in Gleichstromvorwärtsrichtung geschalteten Dioden zwei weitere Dioden in Serie auf, die über einen Kondensator mit dem Mittenabgriff zwischen den beiden Transistoren des Gegentaktfrequenzgenerators verbunden sind, wodurch eine sinusförmige Netzstromaufnahme und eine lineare Abhängigkeit der Gleichstromverbraucherleistung von der Netzspannung gewährleistet wird.

Der Erfindung liegt daher die Aufgabe zugrunde, eine Schaltungsanordnung der eingangs genannten Art anzugeben, die mit technisch einfachen Mitteln eine Reduzierung der Netztromoberwellen bei geringen Verlustleistungen ermöglicht, eine Erhöhung des Leistungsfaktors gewährleistet und gleichzeitig die Einhaltung der Norm gemäß IEC 555-2 Klasse D sicherstellt.

Diese Aufgabe wird bei einer Schaltungsanordnung der eingangs genannten Art erfindungsgemäß dadurch gelöst, daß zwischen den beiden Ausgängen des Gleichrichters und den beiden Eingängen des HF- Inverters die Vorschaltimpedanz in Serie mit mindestens einem Siebkondensator parallel zum Gleichrichterausgang geschaltet ist.

Es wird also nicht mehr eine Vorschaltimpedanz in Serie zur Gesamtschaltung gelegt, sondern in Serie zu mindestens einem Siebkondensator. Somit trägt nurmehr der Kondensator-Ladestrom zur Verlustleistung und Größe der Vorschaltimpedanz bei. Die Vorschaltimpedanz kann dabei ein ohmscher oder ein induktiver Widerstand sein.

Besonders vorteilhaft ist es, zur Vorschaltimpedanz eine Diode parallelzuschalten, da dadurch für den Entladestrom ein verlustarmer Pfad gebildet werden kann.

Eine bevorzugte Spezifikation der Bauteile ist im Patentanspruch 5 angegeben.

Wird bei einer kompakten Leuchtstofflampe für die Vorschaltimpedanz ein einfacher ohmscher Widerstand mit R = 1 kΩ und eine parallelgeschaltete Diode verwendet, beträgt die Verlustleistung bei einer Gesamtleistung von 7 W nur etwa 0,4 W, und der Leistungsfaktor verbessert sich von 0,5 auf 0,8. Die Norm gemäß IEC 555-5 Klasse D wird dadurch erfüllt.

Bei Verwendung einer einfach in Serie zur kompakten Leuchtstofflampe geschalteten entsprechend hohen Impedanz ist die Verlustleistung etwa 2,5- bis 3-mal so hoch und damit unakzeptabel.

Vorteilhaft ist des weiteren der sehr geringe Einschaltstromstoß und der verringerte Rippelstrom des Elektrolytkondensators. Die Standfestigkeit bei Betrieb an Phasenan- und -abschnittsdimmern ist erhöht, sofern die Verwendung dieser Schaltung möglich ist.

Die Schaltungsanordnung ist auch auf Einweg-, Zweiweggleichrichter und auch auf Spannungsverdoppler anwendbar und kann auch mit Pumpschaltungen wie in der EP-Patentschrift 0 253 224 beschrieben kombiniert werden, die dann sinnvollerweise auf kleinere Pumpleistung abgestimmt werden.

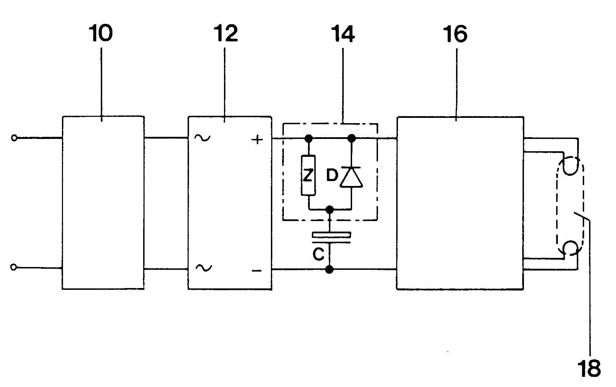

Weitere Vorteile und Merkmale der Erfindung ergeben sich aus der folgenden Beschreibung einer Ausführungsform sowie aus der Zeichnung, die die erfindungsgemäße Schaltungsanordnung darstellt.

Die in der Figur dargestellte Schaltungsanordnung zum Betrieb einer kompakten Leuchtstofflampe bzw. Niederdruckentladungslampe 18 weist einen Entstörfilter 10 auf, der zwischen einer Spannungsquelle und einem Gleichrichter 12 geschaltet ist. An den Ausgängen des Gleichrichters 12 ist ein HF-Inverter 16 angeschlossen, an dessen Ausgängen wiederum die Niederdruckentladungslampe 18 geschaltet ist.

Zusätzlich ist zwischen dem Gleichrichter 12 und dem HF-Inverter 16 eine Vorschaltimpedanz 14 derart angeordnet, daß zwischen den beiden Ausgängen des Gleichrichters 12 der Vorschaltwiderstand Z in Serie mit einem Siebkondensator C und eine Diode D parallel zum Vorschaltwiderstand Z geschaltet sind.

Gemäß einer bevorzugten Ausführungsform weisen die Bauteile folgende Spezifikationen auf:
Z = R = 1 kΩ
C = 4,7 µF
D = 1N4004

## Patentansprüche

1. Schaltungsanordnung zum Betrieb eines Verbrauchers (18) mit
- einem Gleichrichter (12)
- einer Vorschaltimpedanz (14, Z)
- mindestens einem Siebkondensator (C)
- einem HF-Inverter (16)
dadurch gekennzeichnet, daß zwischen den beiden Ausgängen des Gleichrichters (12) und den beiden Eingängen des HF-Inverters (16) die Vorschaltimpedanz (14, Z) in Serie mit mindestens einem Siebkondensator (C) parallel zum Gleichrichterausgang geschaltet ist.

2. Schaltungsanordnung nach Anspruch 1,
dadurch gekennzeichnet, daß zur Vorschaltimpedanz (Z) eine Diode (D) parallelgeschaltet ist.

3. Schaltungsanordnung nach Anspruch 1,
dadurch gekennzeichnet, daß die Vorschaltimpedanz (Z) ein ohmscher Widerstand ist.

4. Schaltungsanordnung nach Anspruch 1,
dadurch gekennzeichnet, daß die Vorschaltimpedanz (Z) eine Induktivität ist.

5. Schaltungsanordnung nach einem oder mehreren der Ansprüche 1 bis 4,
dadurch gekennzeichnet, daß die Bauteile folgende Spezifikationen aufweisen:
Z = R = 1 kΩ C = 4,7 µF D = 1N4004

6. Schaltungsanordnung nach einem oder mehreren der vorstehenden Ansprüche,
dadurch gekennzeichnet, daß ein Entstörfilter (10) dem Gleichrichter (12) vor- oder nachgeschaltet ist, oder zwischen der Serienschaltung aus (14) und dem Siebkondensator (C), und dem HF-Inverter (16) zwischengeschaltet ist.

7. Verwendung der Schaltungsanordnung nach einem der vorstehenden Ansprüche in Kombination mit einer Pumpschaltung.

## Claims

1. Circuit arrangement for the operation of a load (18), having
- a rectifier (12)
- a ballast impedance (14, Z)
- at least one filter capacitor (C)
- an RF invertor (16)
characterized in that, between the two outputs of the rectifier (12) and the two inputs of the RF invertor (16), the ballast impedance (14, Z) in series with at least one filter capacitor (C) is connected in parallel with the rectifier output.

2. Circuit arrangement according to Claim 1, characterized in that a diode (D) is connected in parallel with the ballast impedance (Z).

3. Circuit arrangement according to Claim 1, characterized in that the ballast impedance (Z) is a nonreactive resistor.

4. Circuit arrangement according to Claim 1, characterized in that the ballast impedance (Z) is an inductor.

5. Circuit arrangement according to one or more of Claims 1 to 4, characterized in that the components have the following specifications:
Z = R = 1 kΩ C = 4.7 µF D = 1N4004

6. Circuit arrangement according to one or more of the preceding claims, characterized in that an interference-suppression filter (10) is connected upstream or downstream of the rectifier (12), or is interposed between the series circuit formed by (14) and the filter capacitor (C), and the RF invertor (16).

7. Use of the circuit arrangement according to one of the preceding claims in combination with a pump circuit.

## Revendications

1. Montage servant à faire fonctionner un appareil (18) utilisateur et comportant
- un redresseur (12),
- une impédance (14, Z) formant ballast,
- au moins un condensateur (C) de filtrage,
- un inverseur (16) haute fréquence
caractérisé en ce que, entre les deux sorties du redresseur (12) et les deux entrées de l'inverseur (16) haute fréquence, l'impédance (14, Z) formant ballast est montée, en parallèle à la sortie du redresseur, en série avec au moins un condensateur (C) de filtrage.

2. Montage suivant la revendication 1, caractérisé en ce qu'une diode (D) est montée en parallèle à l'impédance (Z) formant ballast.

3. Montage suivant la revendication 1, caractérisé en ce que l'impédance (Z) formant ballast est une résistance ohmique.

4. Montage suivant la revendication 1, caractérisé en ce que l'impédance (Z) formant ballast est une inductance.

5. Montage suivant l'une ou plusieurs des revendications 1 à 4, caractérisé en ce que les composants ont les spécifications suivantes :
Z = R = 1 kΩ C = 4,7 µF D = 1N4004

6. Montage suivant l'une ou plusieurs des revendications précédentes, caractérisé en ce qu'un filtre (10) antiparasite est monté en amont ou en aval du redresseur (12), ou interconnecté entre le circuit-série constitué de (14) et du condensateur (C) de filtrage et l'inverseur (16) haute fréquence.

7. Utilisation du montage suivant l'une des revendications précédentes en combinaison avec un circuit de pompe.
